# EUROPEAN PATENT APPLICATION

(11) **EP 2 600 311 A1**
(43) Date of publication of application: **05.06.2013**
(21) Application number: 11306590.8
(22) Date of filing: 30.11.2011
(51) Int. Cl.: G06T 11/20

(54) **Method and apparatus for visualizing a data set**

(71) Applicant: Thomson Licensing, 92130 Issy-les-Moulineaux (FR)
(72) Inventor: Theis, Oliver, 32689 Kalletal (DE); Kamphenkel, Oliver, 31275 Lehrte (DE)
(74) Representative: Schmidt-Uhlig, Thomas

(57) **Abstract**

A method and an apparatus for visualizing data sets comprising a defined number of elements, which are subject to a temporal process, are described. After determining (10, 11, 12) a maximum number (B) of displayable clusters at least part of the elements of the data set are retrieved (14). The retrieved elements of the data set are clustered (15) into the determined number of clusters using placeholders for not yet retrieved elements of the data set. After assigning (17) a value to each cluster, the value of each cluster is visualized (18) on the display. Whenever one or more elements of the data set are modified and/or whenever one or more further elements of the data set are retrieved, the clusters, the assigned values and the visualization on the display are updated (15, 17, 18).

## Description

The invention relates to a method and an apparatus for visualizing data sets, and more specifically to a method and an apparatus for visualizing data sets that are subject to a temporal process, i.e. that partly uncompleted and/or continuously updated.

Digital motion pictures, also referred to as digital image sequences, often come along with metadata information. Preferably, metadata information is available for every single frame of the digital image sequence. Metadata is typically generated either by the camera itself or, more likely, by a real-time or non-real-time post processing algorithm. Metadata comprises a plurality of information, e.g. the noise level, image contrast or, in case of more sophisticated algorithms, a number of objects, such as faces or cars or the like, detected within the respective frame. In professional post production environments a human reviewer working on multiple data sets per movie or even with multiple movies having a plurality of data sets needs to inspect the metadata information for certain quality criteria, e.g. for reviewing defects that have been identified in a previous automatic detection process. Due to the huge amount of information the human reviewer has a vital interest in optimizing the time needed to inspect the metadata.

Common techniques for displaying such large amount of data in a single plot, e.g. in a graph or bar plot, typically use downsampling in order to match the amount of data that is desired to be displayed to the available pixels or dots of a display unit. A display unit within the meaning of the term is, for example, a monitor especially used for display of the metadata or a graphical user interface (typically referred to as a GUI), e.g. a window that is used for that purpose. The available resolution is defined by the monitor itself, i.e. by the hardware resolution of the respective monitor or by a number of pixels inside a GUI-window that is used for display of the metadata.

In a recent patent application EP11305111 it has been proposed to split the available metadata into a plurality of clusters and to determine a representative value for each cluster by applying a predetermined function to the metadata elements of the respective cluster. The number of clusters depends on the resolution of the display unit. For each cluster only the representative value is displayed. The predetermined functions are chosen such that outliers in the metadata are not omitted or diminished, e.g. due to averaging, but preserved and well visible for the reviewer.

The above described approach works on an existing metadata sequence, i.e. it is assumed that the complete sequence of metadata is available. However, especially for reviewing large sequences of metadata in the course of movie restoration, it would be desirable to start the reviewing process, and hence the clustering of metadata, already before the complete sequence of metadata is available. Of course, the same problem arises for visualization of any large data set that is partly uncompleted and/or continuously updated.

It is thus an object of the present invention to propose a solution for visualizing data sets that are subject to a temporal process, i.e. that are partly uncompleted and/or continuously updated.

According to the invention, a method for visualizing a data set on a display, the data set comprising a defined number of elements, comprises the steps of:
- determining a maximum number of displayable clusters;
- retrieving at least part of the elements of the data set;
- clustering the retrieved elements of the data set into the determined number of clusters using placeholders for not yet retrieved elements of the data set;
- assigning a value to each cluster;
- visualizing the value of each cluster on the display; and
- updating the clusters, the assigned values and the visualization on the display whenever one or more elements of the data set are modified and/or whenever one or more further elements of the data set are retrieved.

Advantageously, an apparatus for visualizing a data set on a display is adapted to perform the above method according to the invention. For this purpose the apparatus has an input for receiving the elements of the data set, a calculator for determining the number of displayable clusters, a processor for retrieving the elements of the data set, for clustering the retrieved elements into the determined number of clusters using placeholders for not yet retrieved elements of the data set, and for assigning a value to each cluster, a graphics block for generating a display signal from the data provided by the processor, and an output for supplying the display signal to a display.

The invention solves the problem of quickly reviewing large data sets of defined size, which are partly uncompleted and/or continuously updated, i.e. that are subject to a temporal process. The invention allows the data set to be inspected as early as possible, i.e. without waiting for the data set to be complete. For the case that the elements of the data set are generated exactly once within a temporal process of finite duration and do not change afterwards, the invention provides progress information. For the case that the elements of the data set are updated partly, i.e. the elements change continuously, the invention delivers a continuous view on the current data set.

Preferably, clusters that include placeholders are marked for visualization. Such marked clusters are then highlighted when they are visualized, e.g. by color, shape, texture, or symbols. In this way an operator is immediately aware that certain clusters do not yet necessarily have their final value and need to be considered with care.

Favorably, a value is assigned to a cluster by applying a function to the elements of the cluster and assigning a result of the applied function to the cluster. This allows to assign a representative value to each cluster without the need to display too many details of the data set.

Advantageously, the maximum number of displayable clusters is performed by comparing a maximum resolution of the display with a number of pixels needed per cluster. This allows to calculate the number of displayable clusters in a simple manner by dividing the maximum resolution by the number of pixels per cluster.

Preferably, the visualization of the values of the cluster on the display is initiated only when a defined first minimum number of elements of the data set has been retrieved. This ensures that display of the data set starts with a meaningful number of clusters that have their final values. As is depends on the user perception which number is considered to be meaningful, the defined first minimum number is favorably settable by the user.

Advantageously, the updating of the clusters, the assigned values and the visualization on the display is initiated only when a defined second minimum number of elements of the data set has been modified or of further elements has been retrieved. Preferably, the defined second minimum number is settable by a user. This avoids too frequent changes of the display, which could otherwise disturb a review process performed by an operator.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:
- Fig. 1: illustrates an output unit that is coupled to an apparatus for visualizing a data set,
- Fig. 2: schematically illustrates a method a for visualizing a data set,
- Fig. 3: shows a method according to the invention for visualizing a data set,
- Fig. 4: illustrates a visualization of a data set in accordance with the method of Fig. 3, and
- Fig. 5: schematically illustrates an apparatus for visualizing a data set in more detail.

In the following the invention is explained with reference to metadata associated to a digital video. Of course, the invention is likewise applicable to other types of data sets.

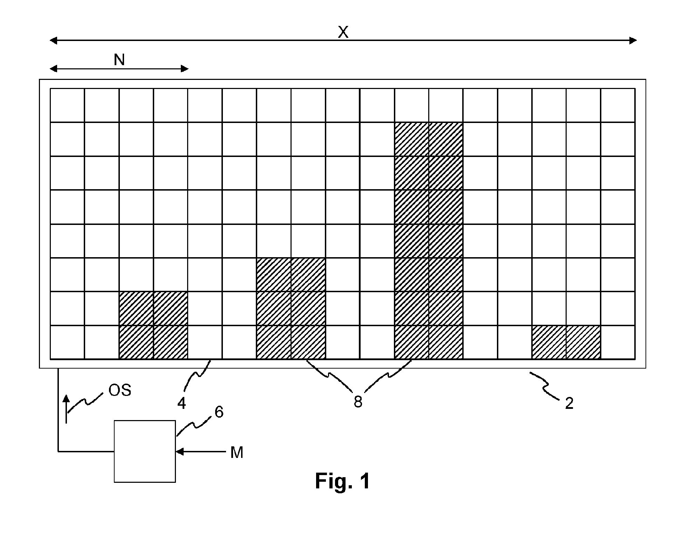

Fig. 1 is a schematic view of an output unit 2. The output unit 2 includes a screen 4, e.g. a TFT display. Of course, the output unit 2 may Likewise be a window of a graphical user interface (GUI). The output unit 2 has a maximum resolution in a horizontal direction of X that is defined by the available horizontal pixels of the screen or the window of the GUI. The output unit 2 is coupled to an apparatus 6 for providing an output signal OS for visualizing a data set. Preferably, the apparatus 6 is a computer, e.g. a personal computer or a work station unit or a part of the same. The output signal OS preferably is a part of a video signal that is provided to the screen 4 by the apparatus 6.

Metadata information, i.e. a metadata vector M of a length S is input to the apparatus 6. The metadata vector M is assigned to a digital image sequence, e.g. a digital video. The length S of the metadata vector M means that the vector comprises a number of S metadata elements, e.g. a set of metadata comprising a number of S metadata elements. A metadata element may be a single value, e.g. a contrast of a frame, or a set of data, e.g. a contrast and a brightness value. The apparatus 6 is configured to process the metadata vector M for visualization on the output unit 2. The metadata vector M is visualized as a plurality of bars 8, each bar 8 having a four horizontal pixels (two dark pixels and two bright pixels).

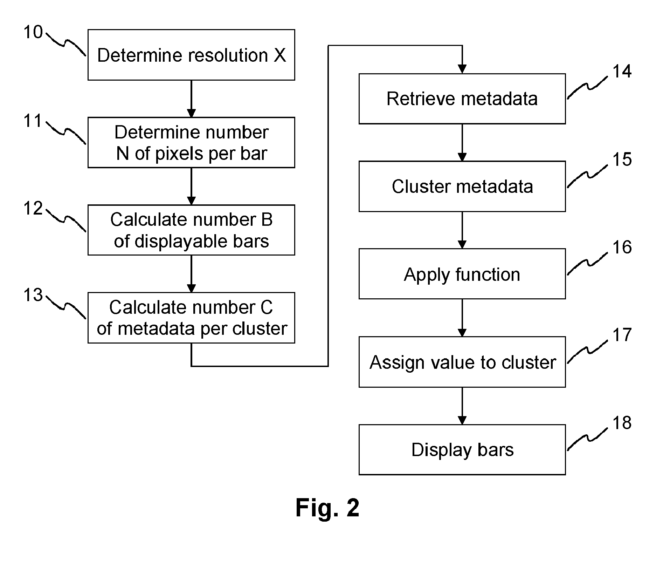

Fig. 2 schematically illustrates a method for processing the metadata vector M for visualization. In a first step 10 the maximum horizontal resolution X of the output unit 2 is determined. Subsequently, a number N of horizontal pixels per bar 8 is determined 11, e.g. from a user input command. Alternatively, the number N of horizontal pixels per bar 8 is a predetermined value. In a further step 12 the maximum number of displayable bars 8 is determined by calculating B=FLOOR(X/N), wherein FLOOR is a round operation towards negative infinity. When the maximum number B of displayable bars 8 is known, the number of metadata elements that have to be assigned to a single cluster is calculated 13 by C=CEIL(S/B), wherein CEIL is a round operation towards positive infinity. Beginning at the first metadata element of a metadata vector M, each element is assigned to a respective cluster. If a remainder of S/B>0 (REM(S, B)>0) exists, the last cluster will have a smaller size than the rest of the clusters. When the actual metadata are retrieved 14, e.g. from a repository, a network, or from an operator, they are clustered 15 into the determined number of clusters. Depending on the operator's input or general specifications, a predetermined function is applied 16 to each metadata element of a respective cluster, e.g. a max-function. The result of the function is then assigned 17 to the respective cluster. Finally, the value is displayed 18 by the height of the bar.

The bars 8 displayed in Fig. 1 are based on a metadata vector M=[1220317011], having a length S=10. The maximum horizontal resolution of the display is X=17, the width N of the graphical element, i.e. the horizontal pixel-width of a bar is N=4. The applied function is MAX, for each cluster, the maximum value of the metadata elements is determined and is assigned to the respective cluster. The displayable number of bars is B=FLOOR(X/N)=4. The cluster size, i.e. the number of metadata elements that is assigned to a single cluster, is C=CEIL(S/B)=3. The calculation of the height of the bars is determined by the following operation on the metadata vector M: G=(MAX([122]), MAX([031]), MAX([701]),MAX ([1]))=[2371], where G is the resulting display vector.

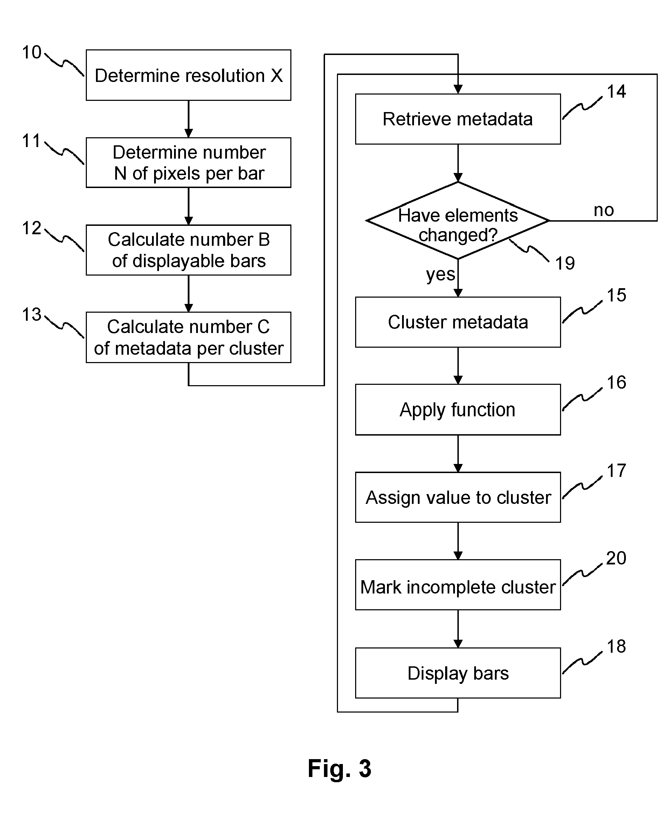

The method described above with reference to Fig. 2 is based on the assumption that every element of the metadata vector M has already been set. However, in practice this is not always the case although the length S of the metadata vector M is known in advance. To address this issue, the method of Fig. 2 is modified in some aspects, as illustrated in Fig. 3. According to the invention, the not yet available elements within a cluster are ignored when the function is applied 16. However, in order to alert the reviewer of missing elements, the uncompleted clusters are marked 20, e.g. through color, texture, markers, or the like. Whenever an element of the metadata vector M changes, i.e. when a missing element becomes available or when an element gets a new value, the desired function is applied again to the corresponding cluster and the display is updated. For this purpose the elements of the metadata vector M are monitored 19. In the figure the display is updated each time an element changes. Of course, it is likewise possible to update the display only when a defined minimum number of elements have changed, e.g. to avoid too frequent updates. Also, preferably a minimum number of elements is first retrieved before the remaining steps of the method are performed. In this way it is ensured that a meaningful display is made available to the operator. Preferably, the minimum number of elements that need to have changed and/or the number of elements that need to be initially retrieved are settable by the user.

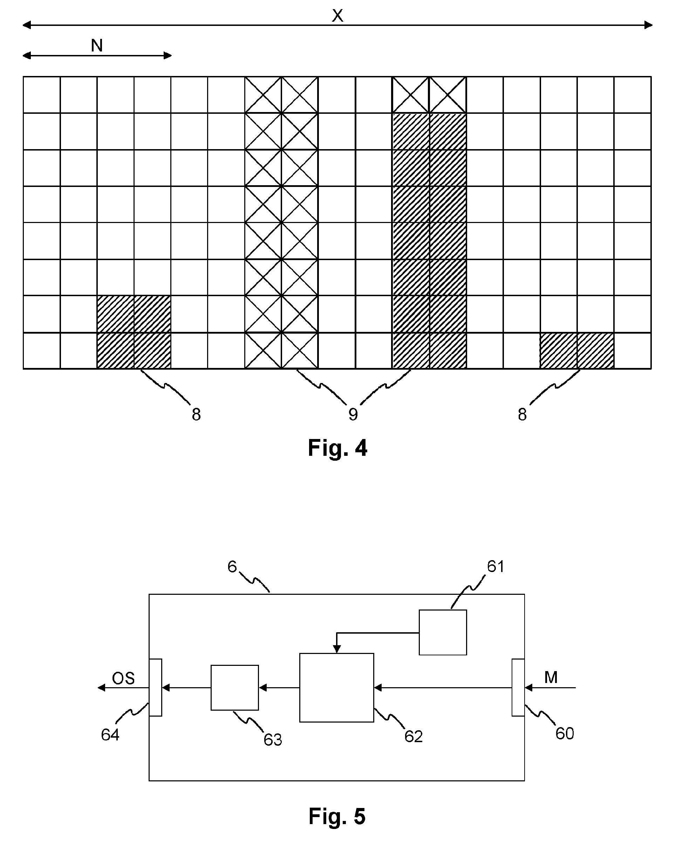

Coming back to the exemplary metadata vector M that is used for Fig. 1, consider that some elements of the metadata vector M are not yet available, e.g. M=[122xxx70x1], where 'x' designates a missing element. In this case the following operation is performed on the metadata vector M: G=(MAX([122]), MAX([xxx]), MAX([70x]),MAX ([1]))=[2x71]. The resulting display is depicted in Fig. 4. In two clusters there are missing elements, which is marked by highlighting the pixels of the corresponding bars 9 in a desired way.

An apparatus 6 according to the invention for visualizing a data set is schematically illustrated in some more detail in Fig. 5. The apparatus 6 has an input 60 for receiving the elements of the metadata vector M. A calculator 61 determines the number of displayable clusters and provides this number to a processor 62. Of course, the calculator 61 may likewise be incorporated into the processor 62. The processor retrieves the elements of the metadata vector M, clusters the retrieved elements into the determined number of clusters using placeholders for not yet retrieved elements of the metadata vector M, and assigns a value to each cluster. A graphics block 63 then generates a display signal OS from the data provided by the processor 62, which is supplied to a display via an output 64. Whenever one or more elements of the metadata vector M are modified and/or whenever one or more further elements of the metadata vector M are retrieved, the processor updates the clusters and the assigned values accordingly. The graphics block 63 then updates the display.

## Claims

1. A method for visualizing a data set on a display (4), the data set comprising a defined number (S) of elements, the method **comprising** the steps of:
- determining (10, 11, 12) a maximum number (B) of displayable clusters;
- retrieving (14) at least part of the elements of the data set;
- clustering (15) the retrieved elements of the data set into the determined number of clusters using placeholders for not yet retrieved elements of the data set;
- assigning (17) a value to each cluster;
- visualizing (18) the value of each cluster on the display; and
- updating (15, 17, 18) the clusters, the assigned values and the visualization on the display whenever one or more elements of the data set are modified and/or whenever one or more further elements of the data set are retrieved.

2. The method according to claim 1, **wherein** clusters with placeholders are marked (20) for visualization.

3. The method according to claim 2, **wherein** marked cluster are highlighted by color, shape, texture, or symbols.

4. The method according to one of the preceding claims, **wherein** the step of assigning (17) a value to a cluster is performed by applying (16) a function to the elements of the cluster and assigning a result of the applied function to the cluster.

5. The method according to one of the preceding claims, **wherein** the step of determining (10, 11, 12) a maximum number (B) of displayable clusters is performed by comparing a maximum resolution (X) of the display (4) with a number of pixels (N) needed per cluster.

6. The method according to one of the preceding claims, **wherein** the step of visualizing (18) the value of each cluster on the display is initiated only when a defined first minimum number of elements of the data set has been retrieved.

7. The method according to claim 6, **wherein** the defined first minimum number is settable by a user.

8. The method according to one of the preceding claims, **wherein** the steps of updating (15, 17, 18) the clusters, the assigned values and the visualization on the display are initiated only when a defined second minimum number of elements of the data set has been modified or of further elements has been retrieved.

9. The method according to claim 8, **wherein** the defined second minimum number is settable by a user.

10. An apparatus (6) for visualizing a data set on a display (4), the data set comprising a defined number (S) of elements, **characterized in that** the apparatus (6) is adapted to perform a method according to one of claims 1 to 9 for visualizing the data set.
